# EUROPEAN PATENT SPECIFICATION

(11) **EP 2 508 648 B1**
(45) Date of publication and mention of the grant of the patent: **14.01.2015**
(21) Application number: 12163023.0
(22) Date of filing: 03.04.2012
(51) Int. Cl.: C23C 30/00, B22F 1/00, B22F 1/02, C22C 1/10, C22C 47/04, C22C 47/06, C22C 47/16

(54) **Component for a turbomachine and method for manufacturing such a component**
Komponente für Turbomaschine und Verfahren zur Herstellung der Komponente
Composant pour une turbomachine et procédé de fabrication d'un tel composant

(30) Priority: 04.04.2011 CH 6042011
(43) Date of publication of application: 10.10.2012
(73) Proprietor: ALSTOM Technology Ltd, 5400 Baden (CH)
(72) Inventor: Duval, Sophie Betty Claire, 8004 Zürich (CH); Beckel, Daniel, 5430 Wettingen (CH); Grasso, Piero-Daniele, 8166 Niederweningen (CH); Stankowski, Alexander, 5303 Würenlingen (CH); Szwedowicz, Jaroslaw Leszek, 5330 Bad Zurzach (CH)

(56) References cited:
- EP-A2- 2 194 162
- WO-A1-99/46338
- WO-A1-2009/156376
- US-A- 3 069 288
- US-A- 3 274 007
- US-A- 4 745 033
- US-A- 4 806 385
- US-A1- 2011 033 721
- DMITRY&EMSP14;G. SHCHUKIN ET AL: "Self-Repairing Coatings Containing Active Nanoreservoirs", SMALL, vol. 3, no. 6, 4 June 2007 (2007-06-04), pages 926-943, XP055001400, ISSN: 1613-6810, DOI: 10.1002/smll.200700064
- KESSLER M R ET AL: "Self-healing structural composite materials", COMPOSITES PART A: APPLIED SCIENCE AND MANUFACTURING, ELSEVIER SCIENCE PUBLISHERS B.V., AMSTERDAM, NL, vol. 34, no. 8, 1 August 2003 (2003-08-01) , pages 743-753, XP004443354, ISSN: 1359-835X, DOI: DOI:10.1016/S1359-835X(03)00138-6

## Description

### BACKGROUND OF THE INVENTION

The present invention relates to the technology of turbomachines. It refers to a component for a turbomachine according to the preamble of claim 1. It further refers to a method for manufacturing such a component.

### PRIOR ART

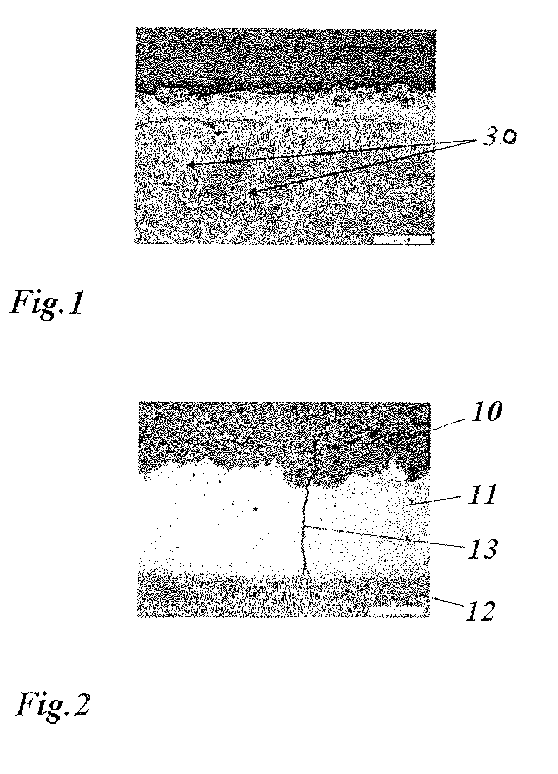

During service, the components in a turbomachine, in particular (but not only) gas turbine hot gas path components like heat shields, liners, blades and vanes, or hot components of other engines are subjected to high temperature, corrosive and oxidizing atmosphere and mechanical load. Due to these extreme conditions, the base metal, brazed regions and metallic coatings of components are prone to crack formation and propagation. Fig. 1 is a photograph showing the coarsening of the grain boundary 30 in a base metal at the origin of crack formation in a depletion zone. Fig. 2 is a photograph showing a thermo-mechanical fatigue crack 13, which is initiating in a bond coat 11. The crack 13 propagates into base metal 12 (= substrate) and into a thermal barrier coating (TBC) 10.

Cracking is a limiting factor for the lifetime of a turbomachine component. In addition, the reconditioning efforts and the scrap rate are also highly dependent on the presence, size and location of cracks at the end of a service interval.

Document EP 1 591 562 A2 discloses a structure comprising at least one metallic surface provided with cathodic protection and a protective coating for said surface, said coating comprising a polymer including micro-capsules containing compounds which are responsive to the electric field generated by the cathodic protection and which are capable of reacting in an alkaline medium to form a protective layer on the surface of the structure. The structures of the disclosure may, for example, be buried or submerged pipelines, reservoirs, boats or port or marine facilities.

Document EP 1 743 957 A1 relates to a method for the treatment of the tip of a turbine blade. In the operation of turbines which are used for example as engines for aeroplanes or as land based industrial gas turbines, it is desirable, from the point of view of efficiency to keep the clearance between the tips of the turbine blades and the corresponding seals in the housing as small as possible. For this reason, the tips of the turbine blades are provided with abrasive coatings, which make it possible for the tips of the turbine blades to cut their own way into the abradable seals when rotating, at least in the first hours of operation. The abrasive coatings usually contain hard grinding or cutting particles, which cut into the seal. It is known to embed these particles into an oxidation resistant metallic matrix, which is provided on the surface of the tip of the blade. The document proposes a method for the treatment of the blade tip of a turbine blade in which silicon carbide (SiC) particles are bound to the surface of a turbine blade for the production of an abrasive coating, with a self-healing barrier layer being produced on the SiC particles.

Document EP 1 840 245 relates to components for high temperature applications, for example turbine blades and combustion chamber walls of gas turbines, having protective layers against oxidation and corrosion. Such layers consist, for example, of an alloy of the MCrAIX type, a protective aluminum oxide layer being formed on this MCrAIX layer. In this case, the aluminum of the MCrAIX alloy diffuses onto the surface of the MCrAIX layer, so that the MCrAIX alloy undergoes a depletion of the element aluminum. However, a preventatively enhanced fraction of aluminum in the MCrAIX alloy from the outset, in order to counteract depletion, leads to poorer mechanical properties of the MCrAIX layer. To have a longer protective action the document proposes to use a matrix with particles for a component or a layer, comprising a matrix material having at least one metal element, wherein the particles have either an oxide, a nitride, a boride, aluminum nitride or aluminum oxynitride, or wherein the compound of the particle has a Si-O-C-Me compound, and the metal element in the compound has a non-stoichiometric fraction.

Document US 6,068,930 relates to thermostructural composite materials comprising fibre reinforcement known as a fibre "preform" in which the fibres are made of a refractory material such as carbon or ceramic, and a matrix that fills in, at least in part, the pores initially present in the fibre reinforcement. Such materials are known for their good mechanical properties, enabling them to be used as structural elements, and for their ability to conserve these properties at high temperatures, in particular when the matrix is made of ceramic. The document wants to improve the ability of a ceramic matrix thermostructural composite material having carbon or carbon-coated fibre reinforcement to withstand oxidation by sequencing the matrix so that cracking of the matrix can be retarded as much as possible. This is achieved by a matrix that is at least partially sequenced with alternating layers of relatively flexible anisotropic material capable of deflecting any cracks that reach them, and layers of relatively rigid ceramic material, said relatively flexible material having a rigidity less than that of the relatively rigid ceramic material. Each of a plurality of elementary sequences of the matrix comprises a relatively flexible layer of the relatively flexible anisotropic material and a relatively rigid ceramic layer, each of the plurality of elementary sequences having a thickness that increases going from the elementary sequence closest to the fibres to the elementary sequence furthest from the fibres, with at least the elementary sequence closest to the fibres coating them in substantially individual manner. The thickness of the relatively flexible layers of the relatively flexible anisotropic material, and the anisotropic character and the capacity for elastic deformation in shear and transversely of the material(s) constituting said layers are such that the matrix of the composite material is free from cracking, at least at the end of the process of building up the composite material.

Document US 2002/0155316 A1 relates to composite MCrAIX-based coatings for superalloy substrates. To have a coating that possesses ductility to minimize crack propagation, while still preserving the necessary oxidation resistance conferred by the presence of an adequate amount of aluminum in the coating, the document proposes the use of composite coatings over a superalloy substrate that can significantly improve performance of parts fabricated there from. These composite MCrAIX coatings are designed to have a high aluminum concentration while retaining desired ductility. These coatings include a MCrAIX phase, and an aluminum-rich phase having an aluminum concentration higher than that of the MCrAIX phase, and including an aluminum diffusion-retarding composition. The aluminum rich phase supplies aluminum to the coating at about the same rate that aluminum is lost through oxidation, without significantly increasing or reducing the concentration of aluminum in the MCrAIX phase of the coating. The result is excellent oxidation resistance, without an increase in brittleness.

Document WO 2008/140479 A2 discloses a thermal barrier coating system, which includes a first layer of ceramic insulating material disposed on a substrate surface and a second layer of ceramic insulating material disposed on the first layer of ceramic insulating material. The second layer of ceramic insulating material includes one or more crack arrestors therein. A third layer of ceramic insulating material is disposed on the second layer of ceramic insulating material, which is configured as a sacrificial layer to absorb mechanical shock generated in the event of a foreign object collision with the third layer. The one or more crack arrestors in the second layer can avoid propagation towards the first layer of one or more cracks that can form in the event of the foreign object collision with the third layer.

Document WO 2008/140481 A1 describes a thermal barrier coating system capable of self-healing, which has a substrate, a metal-based advanced bond coat overlying the substrate and a ceramic top coat overlying the bond coat. The bond coat comprises ceramic oxide precursor materials capable of forming a non-alumina ceramic oxide composition when exposed to a thermally conditioning oxidizing environment. Embodiments of such bond coat comprise rare earth elements in a range of 1-20 weight percent, and Hf in a range of about 5 to 30 weight percent or Zr in a range of about 2 to 20 weight percent. Examples of self-healing TBC systems are provided using such bond coat or its advanced bond coat chemistries in combination with conventional bond coats or conventional bond coat chemistries.

A composite structure is disclosed in document WO 2009/127852 A1, comprising: a first stack comprising a plurality of plies of composite material and at least one ply of self-healing material, the ply of self-healing material comprising a plurality of containers each containing a curable healing liquid; and a second stack comprising a plurality of plies of composite material, the stacks being joined together at a bond line. By placing a ply of self-healing material in one of the stacks (preferably relatively close to the bond line) the ply of self-healing material can resist the propagation of cracks between the first stack and the second stack.

Document WO 2009/156376 A1 relates to a component with a self-healing surface layer or a self-healing enamel or a coating powder. According to the disclosure, the self-healing is guaranteed through a reactive substance that is encased inside of sheathed particles. Damage to the enamel layer leads to the destruction of the sheathing, preferably under the influence of a catalytic material, so that the encased fluid enamel can escape. Under the effect of UV light, the fluid enamel cures and closes the resultant crack.

Document US 2011/033721 A1 discloses a self healing alloy by incorporating of macro, micro or nanosize hollow reinforcements, filled with low melting healing material. The healing material melts and fills the cracks within a metallic matrix.

Document US 3 274 007 A discloses a high-temperature resistant coating with self-healing properties. The coating consists of a refractory oxide dry-mixed with silicon. The silicon has a considerable lower melting point and fills the voids in the refractory oxide.

Document US 3 069 288 A describes a composite article comprising a solid substrate body and a corrosion resistant coating. The coating consist of an intermetallic compound of that substrate metal present as a porous matrix defining a capillary network, and an alloy located in said capillary network which is liquid at the temperature of use of that composite article.

Document US 4 806 385 A discloses a method of producing oxidation resistant coatings for molybdenum by a step-wise application of a plurality of interbonded plasma-sprayed layers of a composite of molybdenum/refractory oxide material.

Document WO 99/46338 A1 describes a self-healing system for a coating system for use at low temperatures. The coating system contains microcapsules which rupture and release fluid upon impact or other stress likely to damage the coating. The fluid form the microcapsules contains a film forming component to cover the damaged area of the coating.

As shown above, some documents describe solutions to prevent crack formation or to stop the crack propagation or even to heal cracks during service.

The present invention offers a new and different solution to the problems described in order to extend the lifetime and/or to reduce the reconditioning efforts and scrap rate for components in turbomachines.

### SUMMARY OF THE INVENTION

It is an object of the present invention to provide a component for a turbomachine or another engine containing a hot component, which substantially and effectively extends its lifetime with respect to crack formation, crack propagation and the healing of cracks.

It is another object of the invention to provide methods for manufacturing such a component.

This and other objects are obtained by a component according to claim 1 and a method according to claim 15.

The component according to the invention, which is used in a turbomachine, in particular a gas turbine, or other engines containing hot components and which is prone to crack formation and propagation by being subjected to high temperatures and/or a corrosive and/or oxidising atmosphere and/or a high mechanical load and/or cyclic thermal load and/or transient conditions, contains a base material, which is a bond coat, made of MCrAlY with M= Fe or Ni or Co or combinations thereof. Said base material is provided with a self healing system in form of an added active phase. The inventive component is characterized in that the said active phase comprises one of Boron, Carbon, Phosphorous, Silicon or combinations thereof as a melting point depressant for reacting with the base material after a diffusion into the base material (15).

According to one embodiment of the invention said active phase has the form of individual particles, which are dispersed within the base material.

Particularly, said particles may be dispersed within the base material in a graded manner.

According to another embodiment of the invention said active phase has the form of fibres, which are incorporated into the base material.

Particularly, said fibres may be in a woven form.

Preferably, said particles and/or fibres each have a structure with a central core, which is enclosed by a shell.

In particular, said central core and said shell are made of chemical substances in the form of ceramics or metals or combinations thereof.

Especially, the chemical substances of the central core have the following characteristics:
a) decrease the melting point of the base material so that softening occurs at operating temperature;
b) diffuse into the base material and/or optionally into the cracks;
c) do not strongly oxidise when present at the surface in contact with oxygen;
d) are able to chemically dissolve metal oxides;
e) have a limited reactivity with Cr in order to avoid a decrease of the corrosion resistance.

Preferably, the chemical substances of the central core comprise one of Boron, Carbon, Phosphorous, Silicon, Nickel or a combination thereof, and react with the base material, thereby reducing the melting temperature.

Especially, the chemical substances of the shell have the following characteristics:
a) diffuse slowly in order to liberate the core substances;
b) do not react with the core substances;
c) have a limited reactivity with Cr in order to avoid a decrease of the corrosion resistance.

Preferably, the chemical substances of the shell comprise Chrome, or Nickel, or Aluminium or a combination thereof.

According to another embodiment of the invention the self-healing system of the component further comprises an additional reservoir phase in order to balance the composition and achieve a constant optimum concentration of chemical substances within the component.

In particular, the reservoir phase is in the form of individual particles, which are dispersed on top of and/or within the base material and each have a structure with a central core, which is enclosed by a shell.

Preferably, the core substances and/or the shell substances of the reservoir phase comprise Chrome, or Nickel, or Aluminium or a combination thereof.

A method for manufacturing a component according to the invention, which component has a bond coat as a base material, made of MCrAlY (M= Fe or Ni or Co or combinations thereof) and wherein said base materia is provided with a self healing system in form of an added active phase, is characterised in that, in a first step bond coat particles and particles of the active phase are dispersed, and in a second step the dispersed material is sprayed onto the component with a Thermal Spray process, especially a High Velocity Oxy Fuel (HVOF) process or an Air Plasma Spraying (APS) process or a Suspension Plasma Spray (SPS), or with a slurry coating process.

### BRIEF DESCRIPTION OF THE DRAWINGS

The present invention is now to be explained more closely by means of different embodiments and with reference to the attached drawings.
- Fig. 1: shows a photograph of the coarsening of the grain boundary at the origin of crack formation in a depletion zone of an exemplary turbomachine component;
- Fig. 2: shows a photograph of thermo-mechanical fatigue crack initiated at the surface of a bond coat, which crack is propagating into both the ceramic layer and the base metal;
- Fig. 3: shows different phases during the lifetime of a component with a healing system according to a first concept of the invention;
- Fig. 4: shows different phases during the lifetime of a component with a healing system according to a second concept of the invention;
- Fig. 5: shows different phases during the lifetime of a component with a healing system according to a third concept of the invention;
- Fig. 6: shows different phases during the lifetime of a component with a healing system according to a fourth concept of the invention;
- Fig. 7: shows an embodiment of the invention with an additional reservoir phase; and
- Fig. 8: shows an embodiment of the invention, where fibres are used as a crack stopping means.

### DETAILED DESCRIPTION OF DIFFERENT EMBODIMENTS OF THE INVENTION

The novelty of the present invention relates to the use of a self healing system for the base material, brazed regions and/or coatings of components based on the addition of melting point depressants for reacting with the base material according to the concept of the invention. The invention can be mitigation for crack formation and propagation due to (but not limited to it):
- corrosion
- and/or oxidation
- and/or grain boundary coarsening due to precipitation
- and/or creep
- and/or low cycle fatigue
- and/or high cycle fatigue
- and/or thermal mechanical fatigue.

It can also heal the cracks already formed.

The advantages of the invention comprise an increase of the lifetime, and/or a reduction of the reconditioning effort related to crack restoration and/or a decrease of the scrap rate and/or a decrease of the operation risk achieved by preventing cracks and/or slowing down crack propagation rate and/or healing the cracks.

In general, the invention has the technical goals of preventing crack formation and/or preventing crack propagation and/or curing/healing existing cracks.

The invention is applicable to newly made and/or reconditioned components within turbomachines, preferably (but not only) gas turbine hot gas path blades and vanes, as well as heat shields and liners, or hot components of other engines. The invention focuses on metallic coatings on the whole component, coatings on a coupon, which is a part of a component but manufactured separately from the rest of the component.

In the explanations given below, the target components without a self healing system are referred to as "base materials".

The self healing system of the invention can be added completely, partially (for example only within the top surface) or on the top of the base materials. Furthermore, the self healing system of the invention can be added to the base material in a graded manner.

The component according to the invention is the least one base material together with the active phase and optionally with the reservoir phase. The base material is around the active (and the reservoir) phase. The component can be for example a coating, a coupon, a braze joint or part of a vane, blade, liner etc.

According to the invention, the self healing system comprises an active phase. In particular, this active phase has particles with potentially different shapes and/or fibers, which are optionally woven. The particles or fibers preferably have a core/shell structure. The core and shell can be made of chemical substances like non oxide or oxide ceramics, metals or combinations thereof.

The chemical substances of the core have preferably the following characteristics:
a) decrease the melting point of the base material so that softening occurs at operating temperature;
b) diffuse into the base material and/or optionally into the cracks;
c) do not strongly oxidize when present at the surface in contact with oxygen;
d) are able to chemically dissolve the metal oxides;
e) have a limited reactivity with Cr in order to avoid a decrease of the corrosion resistance.

Furthermore, the chemical substances from the core may be solid at the operating temperature. They may react with the base material.

The chemical substances of the shell, on the other hand, have the following characteristics:
a) diffuse slowly in order to liberate the core substances;
b) do not react with the core substances; and
c) have a limited reactivity with Cr in order to avoid a decrease of the corrosion resistance.

Optionally, an additional reservoir phase, which may also have a core/shell structure, might be needed in order to balance the composition and achieve a constant optimal concentration of chemical substances (in particular the concentration of Chrome is important for the corrosion protection).

For the active phase with its core/shell structure, the core substances can be so-called melting point depressants (MDP) like Boron, Carbon, Phosphorous, Silicon, Nickel or a combination thereof and the core may be of a material with a softening or melting temperature below or in the range of the operating temperature according to the invention.

The MDPs react with the base material in order to reduce the melting temperature. Materials with a softening or melting temperature below or in the range of the operating temperature preferably do not react with the base material.

The shell substances of the active phase can be Chrome or Nickel or Aluminium or a combination thereof.

For the above-mentioned reservoir phase the core substances can be Chrome or Nickel or Aluminium or a combination thereof.

The shell substances of the reservoir phase can also be Chrome or Nickel or Aluminium or a combination thereof.

For the processing of the base material with the self healing system, the following method is applicable: For a coating with a self healing system the active phase and the bond coat particles, namely MCrAlY particles, are dispersed (mixture of both powders or suspension of both powders) and then sprayed with High Velocity Oxy Fuel (HVOF), a standard process to apply a bond coat, or Air Plasma Spray (APS), or Suspension Plasma Spray (SPS), or slurry coating or another process to apply a coating.

Within the scope of the invention, there are many more alternatives for processing base material with self healing system according to the invention.

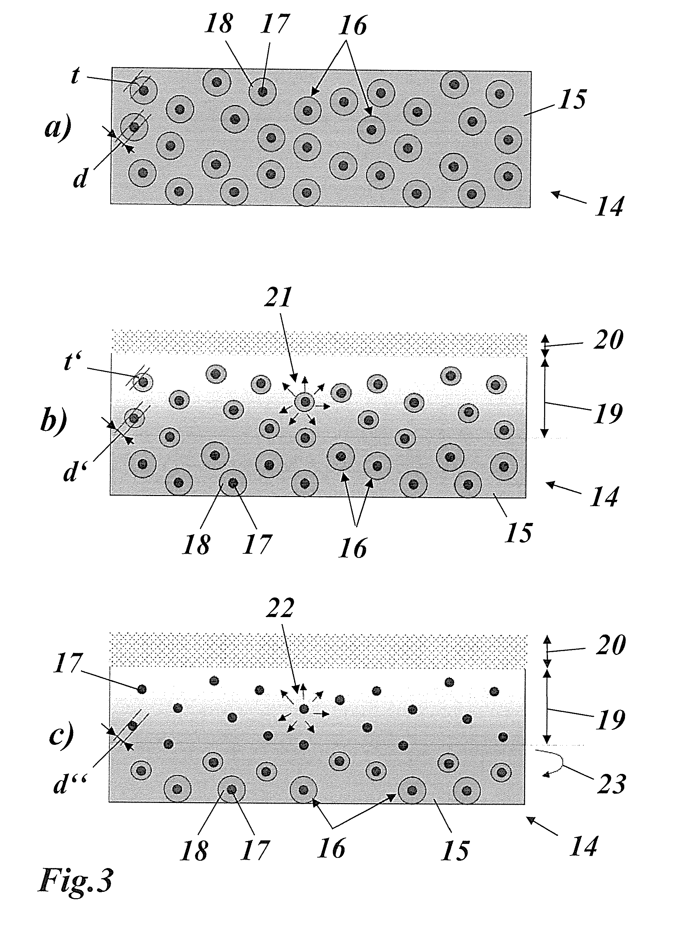

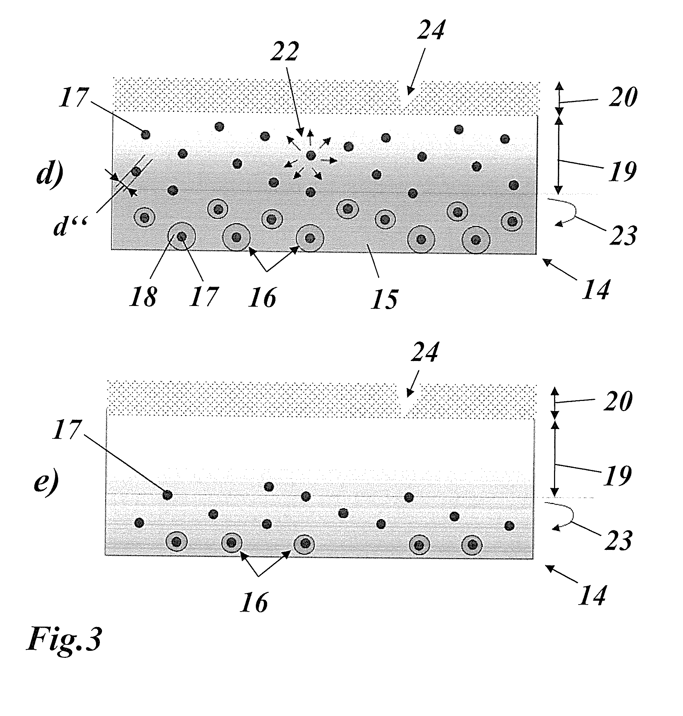

With respect to Fig. 3 to 8, various concepts of the base material plus healing system according to the invention will be explained.

Fig. 3(a)-(e) is related to the case or concept of prevention of crack formation by softening and damping:

Fig. 3(a) shows the initial situation, i.e. at the installation of the component in the turbomachine. The component 14 comprises a base material 15, for example a metallic material, and contains dispersed particles 16 of an active phase, each of the particle 16 has a core 17 enclosed by a shell 18. The shell 18 has an initial shell thickness t. The core 17 has an initial core diameter d; however, the shape of the core can be non-spherical or arbitrary and d then means equivalent diameter of the core volume.

After several hours of operation (Fig. 3(b)) oxidation of the surface of the component 14 results in a depletion zone 19 and an oxide layer 20. The gradient of concentration is the driving force for diffusion 21 of the chemical substances from the shell resulting in a thinner shell. The shell thickness after several hours of operation, t', is smaller than t (t' < t). The core diameter after several hours of operation, d', is equal to d (d' = d).

After several additional hours of operation (Fig. 3(c)) all the shell substances are dissolved into the base material 15. Now, the core substance is liberated by diffusion 22. The base material 15 becomes softer (incipient melting) or locally liquid at the service temperature. One (among several others) mechanism for crack prevention is a damping effect for vibrations produced by viscous dissipation properties of the liquated material. The core diameter, d", is smaller than d'. There is an extension 23 of the depletion zone 19.

After several additional hours of operation (Fig. 3(d)) the region of the depletion zone 19 shows the self healing effect: The base material 15 is softened enough in order to prevent crack formation or is healing a crack 24 simultaneously.

At the end of the lifetime of the component 14 (Fig. 3(e)) the effect is extended together with the extension 23 of the depletion zone 19. Self-maintenance of the process is established by consumption of the surface (oxide layer 20) and propagation of the depletion zone 19.

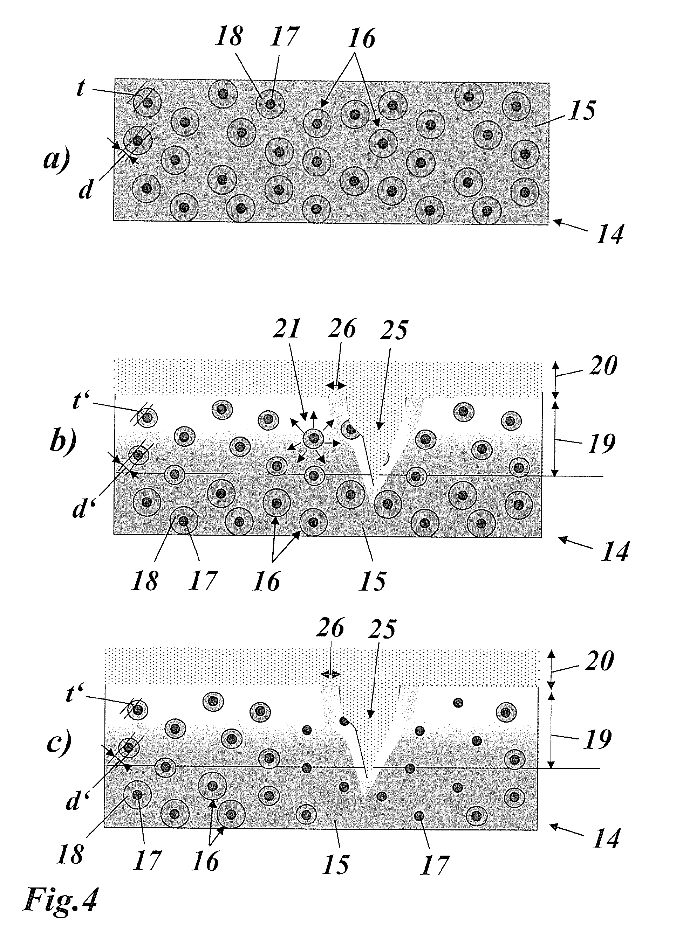

Fig. 4(a)-(d) is related to the case or concept of prevention of large crack formation/propagation:

Fig. 4(a) again shows the initial situation, i.e. at the installation of component in the turbomachine. The component 14 comprises a base material 15 and contains dispersed particles 16 of an active phase. Each of the particle 16 has a core 17 enclosed by a shell 18. The shell 18 has an initial shell thickness t. The core 17 has an initial core diameter d.

After several hours of operation (Fig. 4(b)) there is the formation of large cracks 25 in the base material 15. The oxidation of the crack surface results in a crack-related depletion zone 26. The gradient of concentration in the main depletion zone 19 is the driving force for diffusion 21 of the chemical substances contained in the shell 18 resulting in a thinner shell.

After several additional hours of operation (Fig. 4(c)) the chemical substances from the core 17 are liberated resulting in a softening or a melting point reduction within the depleted area 19. Propagation of the cracks 25 is stopped or at least slowed down.

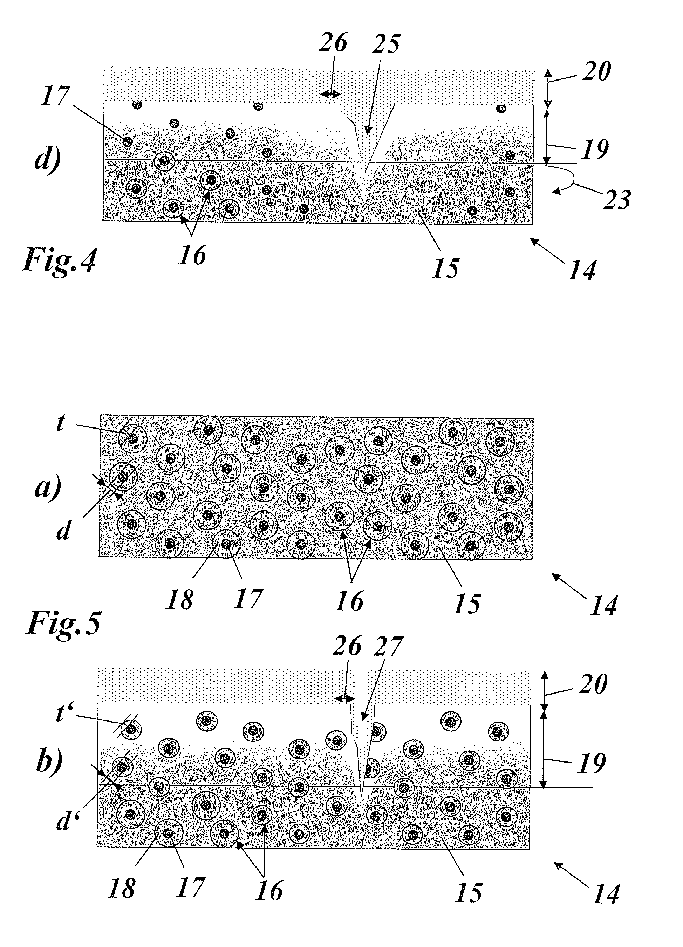

At the end of the lifetime (Fig. 4(d)) self-maintenance of the process is established by consumption of the surface (oxide layer 20) and propagation of the depletion zone 19 (extension 23).

Fig. 5(a)-(e) is related to the case or concept of fine crack healing:

Fig. 5(a) again shows the initial situation, i.e. at the installation of the component in the turbomachine. The component 14, which comprises a base material 15, contains dispersed particles 16, each of which has a core 17 enclosed by a shell 18. The shell 18 has an initial shell thickness t. The core 17 has an initial core diameter d.

After several hours of operation (Fig. 5(b)) there is a formation of fine cracks 27. In addition, an oxide layer 20 and first and second depletion zones 19 and 26 are formed.

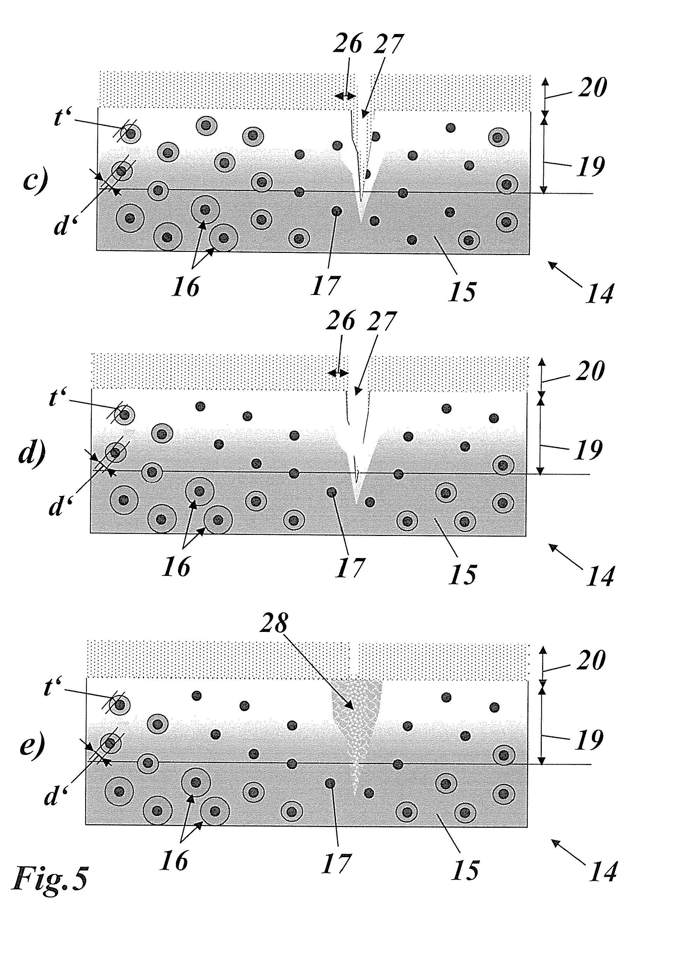

Then, after several additional hours of operation (Fig. 5(c)) a diffusion of substances from the shell 18 takes place.

After several additional hours of operation (Fig. 5(d)) there is a dissolution of metal oxides, which might have formed in the crack 27, by the liberation of the substance from the core 17.

After several additional hours of operation (Fig. 5(e)) there is a softening and/or melting due to the liberation of the core substances and/or liberation of liquid substances. There is a filling 28 of the crack and local re-oxidation at the initial crack position.

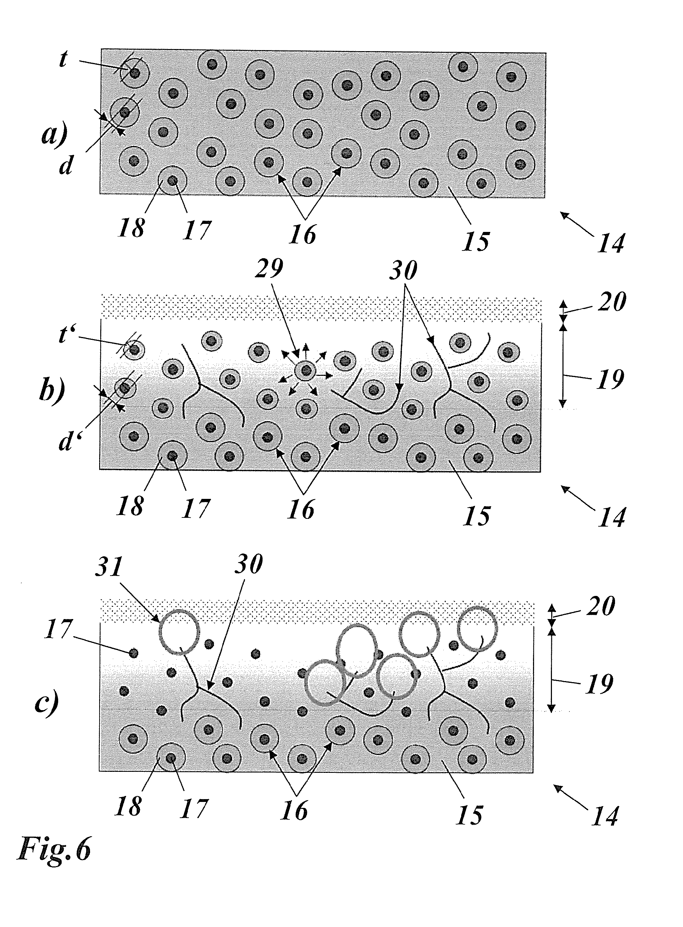

Fig. 6(a)-(c) is related to the case or concept of crack prevention and crack healing:

Fig. 6(a) again shows the initial situation, i.e. at the installation of the component in the turbomachine. The component 14, which comprises a base material 15, contains dispersed particles 16, each of which has a core 17 enclosed by a shell 18. The shell 18 has an initial shell thickness t. The core 17 has an initial core diameter d, meaning the equivalent diameter in case of arbitrary, non-spherical volume of the core.

After several hours of operation (Fig. 6(b)) an oxide layer 20 and a depletion zone 19 are formed. Furthermore, there is a coarsening of the grain boundaries 30 by precipitation in the base material 15. At the same time, diffusion 29 from the shell 18 takes place.

After several additional hours of operation (Fig. 6(c)) cracks tend to form in the prolongation of the coarsened grain boundaries 30 (crack formation zone 31). Cracks are avoided or simultaneously self healed.

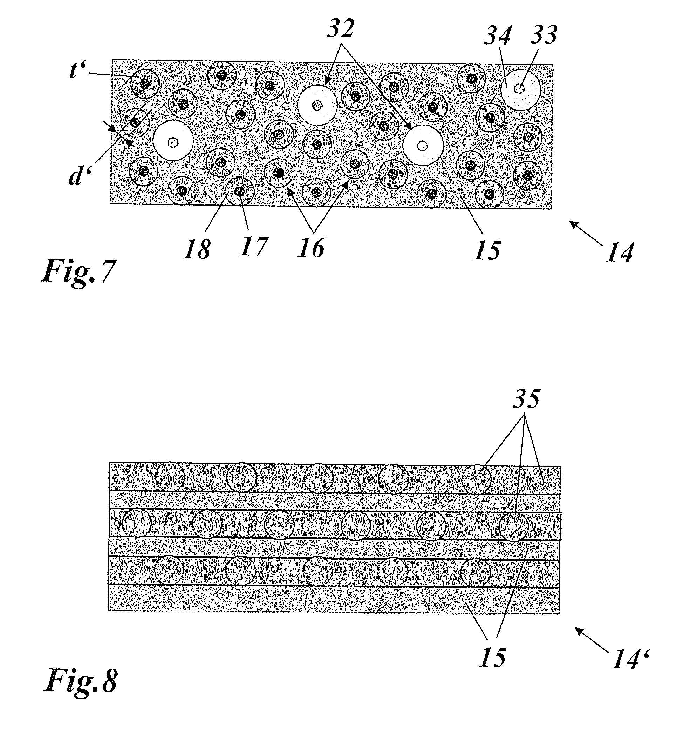

Fig. 7 is related to a concept, which can be additionally applied to the other concepts explained above. It shows the initial situation, i.e. at the installation of the component in the turbomachine. The component 14, which comprises a base material 15, contains dispersed particles 16, each of which has a core 17 enclosed by a shell 18. Further to the active phase (particles 16) there is dispersed a reservoir phase comprising particles 32 with a core/shell structure with core 33 and shell 34.

Finally, Fig. 8 is related to a concept of the control of crack propagation, wherein the base material 15 of the component 14' is reinforced with fibers 35.

The role of the (preferably woven) fibers 35 is to mechanically stop the crack propagation and/or to orient them in directions of lower load. The stress peaks are redistributed in a more favorable direction. The fibers 35 may act as an active phase, as explained before.

### LIST OF REFERENCE NUMERALS

- 10: thermal barrier coating (TBC)
- 11: bond coat
- 12: base metal (substrate)
- 13: crack
- 14,14': component
- 15: base material
- 16: particle (active phase)
- 17,33: core
- 18,34: shell
- 19,26: depletion zone
- 20: oxide layer
- 21,29: shell diffusion
- 22: core diffusion
- 23: extension (depletion zone)
- 24,25,27: crack
- 28: filling
- 30: grain boundary
- 31: crack formation zone
- 32: particle (reservoir phase)
- 35: fibre (active phase)
- d,d',d": core diameter (or equivalent diameter in case of arbitrary, non-spherical volume)
- t,t',t": shell thickness (or equivalent thickness in case of arbitrary, non-spherical volume)

## Claims

1. Component for a turbomachine, in particular a gas turbine, or another engine containing a hot component, which component (14, 14') is prone to crack formation and propagation by being subjected to high temperatures and/or a corrosive and/or oxidising atmosphere and/or a high mechanical load and/or cyclic thermal load and/or transient conditions, whereby said component (14, 14') having a bond coat, made of MCrAlY with M= Fe or Ni or Co or combinations thereof; as a base material (15), wherein said base material (15) is provided with a self healing system in form of an added active phase (16, 35), **characterized in that** said active phase (16, 35) comprises one of Boron, Carbon, Phosphorous, Silicon or combinations thereof as a melting point depressant for reacting with the base material (15) after a diffusion into the base material (15).

2. Component according to claim 1, **characterised in that** said active phase has the form of individual particles (16), which are dispersed within the base material (15).

3. Component according to claim 2, **characterised in that** said particles (16) are dispersed within the base material (15) in a graded manner.

4. Component according to claim 1, **characterised in that** said active phase has the form of fibres (35), which are incorporated into the base material (15).

5. Component according to claim 4, **characterised in that** said fibres (35) are in a woven form.

6. Component according to one of the claims 2 to 5, **characterised in that** said particles (16) and/or fibres (35) each have a structure with a central core (17), which is enclosed by a shell (18).

7. Component according to claim 6, **characterised in that** said central core (17) and said shell (18) are made of chemical substances in the form of ceramics or metals or combinations thereof.

8. Component according to claim 7, **characterised in that** the chemical substances of the central core (17) have the following characteristics:
a) decrease the melting point of the base material so that softening occurs;
b) diffuse into the base material (15) and/or optionally into the cracks;
c) do not strongly oxidize when present at the surface in contact with oxygen;
d) are able to chemically dissolve metal oxides;
e) have a limited reactivity with Cr in order to avoid a decrease of the corrosion resistance.

9. Component according to claim 8, **characterised in that** the chemical substances of the central core (17) comprise one of Boron, Carbon, Phosphorous, Silicon, Nickel or a combination thereof, and react with the base material (15), thereby reducing the melting temperature.

10. Component according to claim 7, **characterised in that** the chemical substances of the shell (18) have the following characteristics:
a) diffuse slowly in order to liberate the core substances;
b) do not react with the core substances,
c) have a limited reactivity with Cr in order to avoid a decrease of the corrosion resistance.

11. Component according to claim 10, **characterised in that** the chemical substances of the shell (18) comprise Chrome, or Nickel, or Aluminium or a combination thereof.

12. Component according to one of the claims 1 to 11, **characterised in that** the self-healing system further comprises an additional reservoir phase (32) in
order to balance the composition and achieve a constant optimum concentration of chemical substances within the component (14, 14').

13. Component according to claim 12, **characterised in that** the reservoir phase is in the form individual particles (32), which are dispersed on top of and/or within the base material (15) and each have a structure with a central core (33), which is enclosed by a shell (34).

14. Component according to claim 13, **characterised in that** the core substances and/or the shell substances of the reservoir phase comprise Chrome, Nickel, or Aluminium, or a combination thereof.

15. Method for manufacturing a component according to one of the claims 1 to 14, said component having a bond coat, made of MCrAlY with M= Fe or Ni or Co or combinations thereof as a base material (15), wherein said base material (15) is provided with a self healing system in form of an added active phase (16, 35) **characterised in that**, in a first step bond coat particles (base material 15) and particles of the active phase (16, 35) are dispersed, and in a second step the dispersed material is sprayed onto the component with a Thermal Spray, or a Suspension Plasma Spray (SPS), or a slurry coating process.

## Patentansprüche

1. Komponente für eine Turbomaschine, insbesondere eine Gasturbine, oder eine andere Maschine, die eine heiße Komponente enthält, wobei die Komponente (14, 14') für die Entstehung und Ausbreitung von Rissen anfällig ist, indem sie hohen Temperaturen und/oder einer korrodierenden und/oder oxidierenden Atmosphäre und/oder einer hohen mechanischen Belastung und/oder einer Temperaturwechselbelastung und/oder instationären Bedingungen ausgesetzt wird, wobei die Komponente (14, 14') eine Haftschicht, hergestellt aus MCrALY mit M=Fe oder Ni oder Co oder eine Kombination davon, als ein Basismaterial (15) hat, wobei das Basismaterial (15) mit einem Selbstheilungssystem in Form einer zugesetzten aktiven Phase (16, 35) ausgestattet ist, **dadurch gekennzeichnet, dass** die aktive Phase (16, 35) Bor, Kohlenstoff, Phosphor, Silizium oder eine Kombination davon als einen Schmelzpunktsenker zur Reaktion mit dem Basismaterial (15) umfasst.

2. Komponente nach Anspruch 1, **dadurch gekennzeichnet, dass** die aktive Phase die Form individueller Partikel (16) hat, die innerhalb des Basismaterials (15) dispergiert sind.

3. Komponente nach Anspruch 2, **dadurch gekennzeichnet, dass** die Partikel (16) auf abgestufte Weise innerhalb des Basismaterials (15) dispergiert sind.

4. Komponente nach Anspruch 1, **dadurch gekennzeichnet, dass** die aktive Phase die Form von Fasern (35) hat, die in das Basismaterial (15) eingearbeitet sind.

5. Komponente nach Anspruch 4, **dadurch gekennzeichnet, dass** die Fasern (35) in einer gewebten Form vorliegen.

6. Komponente nach einem der Ansprüche 2 bis 5, **dadurch gekennzeichnet, dass** die Partikel (16) und/oder Fasern (35) jeweils eine Struktur mit einem zentralen Kern (17) haben, der von einer Schale (18) eingeschlossen ist.

7. Komponente nach Anspruch 6, **dadurch gekennzeichnet, dass** der zentrale Kern (17) und die Schale (18) aus chemischen Substanzen in Form von Keramiken oder Metallen oder Kombinationen davon hergestellt sind.

8. Komponente nach Anspruch 7, **dadurch gekennzeichnet, dass** die chemischen Substanzen des zentralen Kerns (17) die folgenden Charakteristika haben:
a) herabsetzen des Schmelzpunkts des Basismaterials, so dass eine Erweichung eintritt;
b) diffundieren in das Basismaterial (15) und/oder optional in die Risse;
c) oxidieren nicht stark, wenn sie an der Oberfläche in Kontakt mit Sauerstoff vorliegen;
d) sind in der Lage, Metalloxide chemisch zu lösen;
e) weisen ein begrenztes Reaktionsvermögen mit Cr auf, um eine Abnahme der Korrosionsbeständigkeit zu vermeiden.

9. Komponente nach Anspruch 8, **dadurch gekennzeichnet, dass** die chemischen Substanzen des zentralen Kerns (17) eines von Bor, Kohlenstoff, Phosphor, Silizium, Nickel oder eine Kombination davon aufweisen und mit dem Basismaterial (15) reagieren, wodurch die Schmelztemperatur reduziert wird.

10. Komponente nach Anspruch 7, **dadurch gekennzeichnet, dass** die chemischen Substanzen der Schale (18) die folgenden Charakteristika haben:
a) diffundieren langsam, um die Kernsubstanzen freizusetzen;
b) reagieren nicht mit den Kernsubstanzen,
c) weisen ein begrenztes Reaktionsvermögen mit Cr auf, um eine Abnahme der Korrosionsbeständigkeit zu vermeiden.

11. Komponente nach Anspruch 10, **dadurch gekennzeichnet, dass** die chemischen Substanzen der Schale (18) Chrom oder Nickel oder Aluminium oder eine Kombination davon aufweisen.

12. Komponente nach einem der Ansprüche 1 bis 11, **dadurch gekennzeichnet, dass** das Selbstheilungssystem weiterhin eine zusätzliche Reservoirphase (32) aufweist, um die Zusammensetzung auszugleichen und eine konstante optimale Konzentration von chemischen Substanzen in der Komponente (14, 14') zu erreichen.

13. Komponente nach Anspruch 12, **dadurch gekennzeichnet, dass** die Reservoirphase in der Form individueller Partikel (32) vorliegt, die auf und/oder in dem Basismaterial (15) dispergiert sind und jeweils eine Struktur mit einem zentralen Kern (33), der von einer Schale (34) eingeschlossen ist, haben.

14. Komponente nach Anspruch 13, **dadurch gekennzeichnet, dass** die Kernsubstanzen und/oder die Schalensubstanzen der Reservoirphase Chrom, Nickel oder Aluminium oder eine Kombination davon aufweisen.

15. Verfahren zum Herstellen einer Komponente nach einem der Ansprüche 1 bis 14, wobei die Komponente eine Haftschicht hat, hergestellt aus MCrALY mit M=Fe oder Ni oder Co oder eine Kombination davon als ein Basismaterial (15), wobei das Basismaterial (15) mit einem Selbstheilungssystem in Form einer zugesetzten aktiven Phase (16, 35) ausgestattet ist, **dadurch gekennzeichnet, dass** in einem ersten Schritt Haftschichtpartikel (Basismaterial 15) und Partikel der aktiven Phase (16, 35) dispergiert werden und in einem zweiten Schritt das dispergierte Material mit einem thermischen Sprühprozess oder einem Suspensionsplasmaspritzen (SPS) oder mit einem Aufschlämmungsbeschichtungsprozess auf die Komponente gesprüht wird.

## Revendications

1. Composant pour une turbomachine, en particulier une turbine à gaz, ou un autre moteur contenant un composant chaud, lequel composant (14, 14') est sujet à la formation et la propagation de fissures en étant soumis à des températures élevées et/ou une atmosphère corrosive et/ou oxydante et/ou une sollicitation mécanique importante et/ou une sollicitation thermique cyclique et/ou des conditions transitoires, ledit composant (14, 14') ayant une couche d'accrochage, constituée de MCrAlY avec M = Fe ou Ni ou Co ou une combinaison de ceux-ci en tant que matériau de base (15), ledit matériau de base (15) étant pourvu d'un système d'autocicatrisation sous la forme d'une phase active ajoutée (16, 35), **caractérisé en ce que** ladite phase active (16, 35) comprend un élément parmi le bore, le carbone, le phosphore, le silicium, ou une combinaison de ceux-ci en tant qu'élément réduisant le point de fusion destiné à réagir avec le matériau de base (15) après une diffusion dans le matériau de base (15).

2. Composant selon la revendication 1, **caractérisé en ce que** ladite phase active a la forme de particules individuelles (16), qui sont dispersées à l'intérieur du matériau de base (15).

3. Composant selon la revendication 2, **caractérisé en ce que** lesdites particules (16) sont dispersées à l'intérieur du matériau de base (15) d'une manière progressive.

4. Composant selon la revendication 1, **caractérisé en ce que** ladite phase active a la forme de fibres (35), qui sont incorporées dans le matériau de base (15).

5. Composant selon la revendication 4, **caractérisé en ce que** lesdites fibres (35) sont sous une forme tissée.

6. Composant selon une des revendications 2 à 5, **caractérisé en ce que** lesdites particules (16) et/ou fibres (35) ont chacune une structure avec un coeur central (17), qui est entouré par une coquille (18).

7. Composant selon la revendication 6, **caractérisé en ce que** ledit coeur central (17) et ladite coquille (18) sont constitués de substances chimiques sous la forme de céramiques ou métaux ou combinaisons de ceux-ci.

8. Composant selon la revendication 7, **caractérisé en ce que** les substances chimiques du coeur central (17) ont les caractéristiques suivantes :
a) abaissent le point de fusion du matériau de base de telle sorte qu'un ramollissement se produit ;
b) diffusent dans le matériau de base (15) et/ou éventuellement dans les fissures ;
c) ne s'oxydent pas fortement lorsqu'elles sont présentes à la surface en contact avec de l'oxygène ;
d) sont susceptibles de dissoudre chimiquement des oxydes métalliques ;
e) ont une réactivité limitée avec Cr afin d'éviter une diminution de la résistance à la corrosion.

9. Composant selon la revendication 8, **caractérisé en ce que** les substances chimiques du coeur central (17) comprennent un élément parmi le bore, le carbone, le phosphore, le silicium, le nickel, ou une combinaison de ceux-ci, et réagissent avec le matériau de base (15), réduisant ainsi la température de fusion.

10. Composant selon la revendication 7, **caractérisé en ce que** les substances chimiques de la coquille (18) ont les caractéristiques suivantes :
a) diffusent lentement afin de libérer les substances du coeur ;
b) ne réagissent pas avec les substances du coeur ;
c) ont une réactivité limitée avec Cr afin d'éviter une diminution de la résistance à la corrosion.

11. Composant selon la revendication 10, **caractérisé en ce que** les substances chimiques de la coquille (18) comprennent du chrome, ou du nickel, ou de l'aluminium, ou une combinaison de ceux-ci.

12. Composant selon une des revendications 1 à 11, **caractérisé en ce que** le système d'autocicatrisation comprend en outre une phase réservoir supplémentaire (32) afin d'équilibrer la composition et d'atteindre une concentration optimale constante de substances chimiques à l'intérieur du composant (14, 14').

13. Composant selon la revendication 12, **caractérisé en ce que** la phase réservoir est sous la forme de particules individuelles (32), qui sont dispersées au-dessus et/ou à l'intérieur du matériau de base (15) et ont chacune une structure avec un coeur central (33), qui est entouré par une coquille (34).

14. Composant selon la revendication 13, **caractérisé en ce que** les substances de coeur et/ou les substances de coquille de la phase réservoir comprennent du chrome, du nickel ou de l'aluminium, ou une combinaison de ceux-ci.

15. Procédé de fabrication d'un composant selon une des revendications 1 à 14, ledit composant ayant une couche d'accrochage, constituée de MCrAlY avec M = Fe ou Ni ou Co ou une combinaison de ceux-ci en tant que matériau de base (15), ledit matériau de base (15) étant pourvu d'un système d'autocicatrisation sous la forme d'une phase active ajoutée (16, 35), **caractérisé en ce que**, dans une première étape, des particules de couche d'accrochage (matériau de base 15) et des particules de la phase active (16, 35) sont dispersées, et dans une deuxième étape, le matériau dispersé est projeté sur le composant avec un procédé de projection thermique, ou de projection plasma de suspension (SPS), ou de revêtement en suspension.
